# EUROPÄISCHE PATENTSCHRIFT

(11) **EP 3 121 461 B1**
(45) Veröffentlichungstag und Bekanntmachung des Hinweises auf die Patenterteilung: **05.09.2018**
(21) Anmeldenummer: 16173624.4
(22) Anmeldetag: 09.06.2016
(51) Int. Cl.: F16B 13/08

(54) **BEFESTIGUNGSANORDNUNG UND SPREIZANKER**
FASTENING ASSEMBLY AND EXPANSION ANCHOR
SYSTEME DE FIXATION ET ANCRE EXTENSIBLE

(30) Priorität: 22.07.2015 DE 102015111886; 24.02.2016 DE 102016103196
(43) Veröffentlichungstag der Anmeldung: 25.01.2017
(73) Patentinhaber: fischerwerke GmbH & Co. KG, 72178 Waldachtal (DE)
(72) Erfinder: Linka, Martin, 72160 Horb a.N. (DE); Schäuffele, Jürgen, 72178 Waldachtal (DE); Schillinger, Peter, 72224 Ebhausen (DE)
(74) Vertreter: Lehmann, David

(56) Entgegenhaltungen:
- EP-A1- 0 308 619

## Beschreibung

Die Erfindung betrifft eine Befestigungsanordnung mit den Merkmalen des Oberbegriffs des Anspruchs 1 sowie einen Spreizanker mit den Merkmalen des Oberbegriffs des Anspruchs 7.

Aus der Europäischen Patentschrift EP 0 308 619 B1 ist ein Spreizanker bekannt, der in einem Sackloch in einem Verankerungsgrund formschlüssig verankert werden kann. Hierzu wird ein Spreizabschnitt einer Spreizhülse des Spreizankers auf einen Spreizkörper des Ankerbolzens aufgeschoben, wodurch der Spreizabschnitt sich radial weitet. Zum Verankern wird der Spreizanker in das Sackloch eingeführt, bis der Ankerbolzen am Bohrlochgrund des Sacklochs ansteht, und die Spreizhülse durch Schläge auf ihr hinteres Ende auf den Spreizkörper aufgeschoben, soweit, bis eine am Ankerbolzen angeordnete Setztiefenmarkierung durch das Verschieben der Spreizhülse sichtbar wird, was ein Zeichen für ein planmäßiges Verspreizen der Spreizhülse ist. Nachteilig an der bekannten Befestigungsanordnung ist, dass, wenn das Sackloch nicht tief genug gebohrt ist, die Spreizhülse nach dem Verspreizen über den Bohrlochmund übersteht, toleranzbedingt auch dann, wenn die Setztiefenmarkierung ein planmäßiges Verspreizen anzeigt und der Spreizabschnitt planmäßig verspreizt ist. Mit "planmäßig" ist hier und nachfolgend gemeint, dass die in technischen Unterlagen für die Verwendung des jeweiligen Spreizankers angegebenen Bedingungen, wie beispielsweise die Tiefe des Sacklochs eingehalten sind, also beispielsweise das Sackloch mit der geforderten Tiefe hergestellt ist. Bei dem aus der Europäischen Patentschrift EP 0 308 619 B1 bekannten Spreizdübel muss zur Herstellung des Sacklochs ein spezieller Bundbohrer mit einem Anschlagbund verwendet werden, dessen definierte Bohrtiefe auf die planmäßige Setztiefe des Spreizankers abgestimmt ist. Ein derartiger Bundbohrer ist beispielsweise aus dem Dokument "European Technical Assessment ETA 14/0069 of 02/2014" für den Hilti Hinterschnittanker HMU-PF bekannt, in dem die planmäßige Installation dieses Spreizankers beschrieben ist.

Aufgabe der Erfindung ist es, einen Spreizanker für eine Befestigungsanordnung vorzuschlagen, der in ein Sackloch eingesetzt werden kann, das mit einem Bohrer ohne Anschlagbund hergestellt worden ist.

Diese Aufgabe wird erfindungsgemäß durch eine Befestigungsanordnung mit den Merkmalen des Anspruchs 1 sowie durch einen Spreizanker mit den Merkmalen des Anspruchs 7 gelöst.

Die erfindungsgemäße Befestigungsanordnung weist einen Verankerungsgrund und einen Spreizanker auf. Der Verankerungsgrund ist insbesondere ein mineralischer Verankerungsgrund, beispielsweise eine Decke oder eine Wand aus Beton. In den Verankerungsgrund wird ein Sackloch gebohrt, in das der Spreizanker zum Verankern eingeführt wird. Das Sackloch erstreckt sich im Verankerungsgrund vom Bohrlochmund bis zum Bohrlochgrund. Mit "Bohrlochmund" ist der Teil des Sacklochs gemeint, der sich im Bereich der Oberfläche des Verankerungsgrunds befindet, durch die das Sackloch in den Verankerungsgrund eingebracht wird. Der Bohrlochmund ist insbesondere bündig mit der das Sackloch umgebenden Oberfläche des Verankerungsgrunds. Wird der Spreizanker in Durchsteckmontage durch ein Anbauteil hindurch in den Verankerungsgrund eingebracht, so wird das Sackloch im Regelfall durch das Anbauteil hindurch gebohrt. In diesem Fall ist der Bohrlochmund der Bereich des Sacklochs, der bündig mit der das Sackloch umgebenden Oberfläche des Anbauteils ist. Der "Bohrlochgrund" des Sacklochs schließt dagegen das Sackloch in seiner Tiefe ab. Der Bohrlochmund bildet somit das in Einbringrichtung hintere Ende des Sacklochs, in das der Spreizanker eingebracht wird, während der Bohrlochgrund das vordere Ende des Sacklochs bildet. Bohrlochmund und der Bohrlochgrund sind durch die Bohrlochwand verbunden.

Der Spreizanker weist einen Ankerbolzen und eine Spreizhülse auf und ist durch Verspreizen der Spreizhülse in dem Sackloch im Verankerungsgrund verankerbar. Der Spreizanker erstreckt sich insbesondere in Längsrichtung entlang einer Längsachse, die insbesondere parallel zur Einbringrichtung des Spreizankers in das Sackloch verläuft. Der Ankerbolzen weist zumindest an seinem in Einbringrichtung hinteren Teil ein Lastangriffsmittel auf, insbesondere in Form eines Außengewindes, auf das eine Mutter aufgeschraubt werden kann. In diesem Bereich ist der Ankerbolzen insbesondere zylindrisch gestaltet. Der Ankerbolzen weist einbringseitig einen Spreizkörper zum Verspreizen der Spreizhülse im Sackloch auf. Insbesondere erweitert sich der Spreizkörper in Einbringrichtung im Durchmesser, insbesondere konisch. Mit "Durchmesser" ist der Durchmesser eines Umkreises um einen Querschnitt des Hinterschnittankers gemeint, der in einer Ebene liegt, zur der die Längsachse eine Flächennormale bildet. Insbesondere schneidet die Längsachse die Ebene im Mittelpunkt des Umkreises. Der Spreizkörper kann insbesondere die Form eines Kegelstumpfs aufweisen und mit einer gewölbten Spreizfläche ausgestaltet sein.

Die Spreizhülse ist rohrförmig, insbesondere hohlzylindrisch ausgebildet. Die rohrförmige Spreizhülse kann im Umfang geschlossen oder über ihre Länge ganz oder teilweise geschlitzt sein. Die rohrförmige Spreizhülse des erfindungsgemäßen Spreizankers kann beispielsweise aus einem geschlossenen Rohr aus Metall oder aus einem Blech durch Umformen hergestellt werden, wobei sie im letzteren Fall einen Schlitz aufweist, der sich über ihre gesamte Länge erstreckt, sofern er nicht durch Schweißen o.ä. geschlossen wird. Die Spreizhülse ist insbesondere einteilig, kann aber auch mehrteilig ausgebildet sein und ist am Ankerbolzen in Längsrichtung beweglich angeordnet, insbesondere derart, dass die Spreizhülse den Ankerbolzen in Umfangsrichtung umfasst. Mit "in Längsrichtung beweglich" ist hier gemeint, dass die Spreizhülse in Längsrichtung, beispielweise mittels eines Setzwerkzeugs, entlang der Längsachse zum Spreizkörper hin, bewegbar ist. Dies schließt nicht aus, dass die Spreizhülse mittels eines Verliersicherungselements auf dem Ankerbolzen gehalten ist, so dass sich die Spreizhülse beim Transport nicht vom Ankerbolzen lösen kann. Das Verliersicherungselement ist beispielsweise eine, insbesondere punktuelle, Einprägung in der Mantelfläche der Spreizhülse, die in das als Gewinde ausgebildete Lastangriffsmittel eingreift. Die Spreizhülse weist in Einbringrichtung vorn einen Spreizabschnitt auf, der mittels des Spreizkörpers aufspreizbar ist, das heißt, im Durchmesser vergrößert werden kann.

Insbesondere ist der Spreizabschnitt des erfindungsgemäßen Spreizankers an einem Ende mehrfach geschlitzt und weist Spreizelemente auf, die durch Schlitze voneinander getrennt sind. Grundsätzlich kann die Spreizhülse im Wesentlichen über ihre ganze Länge geschlitzt sein. An ihrem in Einbringrichtung hinteren Teil weist die Spreizhülse jedoch insbesondere nur einen oder insbesondere keinen Schlitz auf, ist dort also ungeschlitzt. Die Spreizelemente sind mittels des Spreizkörpers radial voneinander weg aufspreizbar, wenn der Spreizabschnitt der Spreizhülse auf den Spreizkörper aufgeschoben wird. Die Schlitze können in Längsrichtung verlaufen oder zur Längsachse geneigt sein. Die Spreizelemente sind insbesondere kragarmförmig und in Umfangsrichtung gewölbt ausgebildet. An den Spreizelementen kann eine Materialschwächung vorgesehen sein, die das Aufspreizen, also das Biegen der Spreizelemente radial nach außen weg von der Längsachse, erleichtert. Die Schwächung kann beispielsweise eine in Umfangsrichtung verlaufende Nut, eine Durchbrechung der Wand der Spreizhülse oder eine lokale Erweiterung eines oder mehrerer Schlitze sein, wobei die Schwächung insbesondere im Bereich des in Einbringrichtung hinteren Endes der Schlitze angeordnet ist.

Der Spreizanker ist insbesondere derart gestaltet, dass zum Verspreizen ein Setzwerkzeug an das hintere Ende der Spreizhülse aufgesetzt, und dass die Spreizhülse durch Schläge auf ihr hinteres Ende auf den Spreizkörper aufgeschoben werden kann. Die Schläge können insbesondere unmittelbar vom Setzwerkzeug auf die Spreizhülse übertragen werden. Hierzu kann das Setzwerkzeug ebenfalls rohrförmig ausgebildet sein. Zum Verspreizen ist der Spreizkörper insbesondere im Bohrloch ortsfest gehalten, insbesondere indem der Ankerbolzen mit seinem vorderen Ende am Bohrlochgrund ansteht.

Erfindungsgemäß ist an der Spreizhülse des Spreizankers eine erste Setztiefenmarkierung angeordnet, deren in Einbringrichtung vorderes Ende sich in einem unverspreizten Zustand, wenn der Ankerbolzen planmäßig am Bohrlochgrund des Sacklochs ansteht und die Spreizhülse soweit gegen den Spreizkörper verschoben ist, dass sie ohne aufzuspreizen nicht weiter gegen den Spreizkörper bewegt werden kann, am Bohrlochmund oder im Sackloch befindet. Das in Einbringrichtung vordere Ende der Setztiefenmarkierung steht erfindungsgemäß in dieser Position nicht entgegen der Einbringrichtung über den Bohrlochmund über. Die erste Setztiefenmarkierung ist somit derart an der Spreizhülse angeordnet, dass sie sich in dieser Position befindet, wenn das Sackloch eine für das planmäßige Verspreizen des Spreizankers ausreichende Tiefe aufweist. Liegt das in Einbringrichtung vordere Ende der ersten Setztiefenmarkierung in dieser Position außerhalb des Sacklochs, so signalisiert die erste Setztiefenmarkierung dem Anwender, dass der Spreizanker noch nicht verspreizt werden darf, sondern aus dem Sackloch entfernt und das Sackloch tiefer gebohrt werden muss, bis die planmäßige Bohrtiefe erreicht ist. Der Spreizanker dient hier als Prüflehre für die Tiefe des Sacklochs. Die Verwendung eines speziellen Bundbohrers zum Bohren des Sacklochs ist daher nicht notwendig. Die erste Setztiefenmarkierung ist insbesondere mit Abstand vom Spreizabschnitt angeordnet.

Vorzugsweise ist die erste Setztiefenmarkierung zudem derart ausgebildet, dass deren in Einbringrichtung hinteres Ende sich im unverspreizten Zustand, wenn der Ankerbolzen planmäßig am Grund des Sacklochs ansteht und die Spreizhülse soweit gegen den Spreizkörper verschoben ist, dass sie ohne aufzuspreizen nicht weiter gegen den Spreizkörper bewegt werden kann, sich am Bohrlochmund oder außerhalb des Sacklochs befindet, also entgegen der Einbringrichtung über den Bohrlochmund übersteht. Dies signalisiert dem Anwender, dass das Sackloch auch nicht zu tief gebohrt ist. Der Abstand des vorderen Endes vom hinteren Ende der Setztiefenmarkierung entspricht somit insbesondere der Größe der planmäßig erlaubten Bohrtiefentoleranz des Sacklochs.

Die erfindungsgemäße Befestigungsordnung ist vorzugsweise derart ausgestaltet, dass ein hinteres Ende der Spreizhülse in einem verspreizten Zustand, in dem der Spreizanker planmäßig im Sackloch verankert ist, bündig mit dem Bohrlochmund ist oder sich innerhalb des Sacklochs befindet. Der Spreizanker ist also derart gestaltet, dass er in einem Sackloch mit planmäßiger Tiefe planmäßig verspreizt ist, wenn das in Einbringrichtung hintere Ende der Spreizhülse nicht entgegen der Einbringrichtung über den Bohrlochmund übersteht. Ist das hintere Ende der Spreizhülse bündig mit dem Bohrlochmund, so erkennt ein Anwender, dass der Setzvorgang abgeschlossen und der Spreizanker ausreichend verspreizt und planmäßig im Sackloch verankert ist.

Vorzugsweise ist am Ankerbolzen des Spreizankers eine zweite Setztiefenmarkierung angeordnet, die im planmäßig verspreizten Zustand zumindest teilweise über den Bohrlochmund übersteht. Die zweite Setztiefenmarkierung wird insbesondere im unverspreizten Zustand von der Spreizhülse verdeckt. Wird die Spreizhülse weit genug auf den Spreizkörper aufgeschoben, so kommt die zweite Setztiefenmarkierung zum Vorschein und zeigt an, dass der Spreizanker planmäßig verspreizt ist.

Die erste und/oder die zweite Setztiefenmarkierung kann beispielsweise eine Farbmarkierung, insbesondere in der Form eines umlaufenden farbigen Rings, als Einstich, als Einprägung oder als Rändelung ausgebildet sein, wobei diese Aufzählung nicht abschließend ist. Vorzugsweise ist die erste Setztiefenmarkierung eine Nut, die einfach und kostengünstig an der Spreizhülse, die wie der Ankerbolzen im Regelfall aus Stahl hergestellt ist, durch Drehen oder Umformen angebracht werden kann.

Weiterhin ist bevorzugt, dass die in Längsrichtung gemessene Breite der Nut im verspreizten Zustand geringer als im unverspreizten Zustand ist. Die Nut ist derart ausgebildet, dass sie nach dem planmäßigen Verspreizen der Spreizhülse im Sackloch gestaucht werden kann. Die Spreizhülse ist im Bereich der Nut geschwächt, wodurch die Spreizhülse im Bereich der Nut, beispielsweise durch Schläge auf das in Einbringrichtung hintere Ende der Spreizhülse, in Längsrichtung gestaucht und somit verkürzt werden kann. Dies hat den Vorteil, dass die Spreizhülse, falls sie aufgrund von Toleranzen nach dem planmäßigen Verspreizen mit ihrem in Einbringrichtung hinteren Ende über den Bohrlochmund übersteht, gestaucht werden kann, bis ihr hinteres Ende bündig mit dem Bohrlochmund ist.

Für die erfindungsgemäße Befestigungsanordnung kann insbesondere ein Spreizanker verwendet werden, wie er mit den Ansprüchen 7 bis 11 beansprucht wird. Bei dem erfindungsgemäßen Spreizanker handelt es sich um eine spezielle Ausführungsform des bereits für die erfindungsgemäße Befestigungsanordnung allgemeiner beschriebenen Spreizankers. Kennzeichnend für den erfindungsgemäßen Spreizanker ist, dass an der Spreizhülse eine in Umfangsrichtung verlaufende Nut ausgebildet ist. Die Spreizhülse weist zudem einen in Einbringrichtung vor der Nut angeordneten vorderen Abschnitt und einen in Einbringrichtung hinter der Nut angeordneten hinteren Abschnitt auf. Der hintere Abschnitt und die Nut sind erfindungsgemäß derart ausgebildet, dass die in Längsrichtung gemessene Breite der Nut größer als die Hälfte der in Längsrichtung gemessenen Länge des hinteren Abschnitts, vorzugsweise größer als die in Längsrichtung gemessene Länge des hinteren Abschnitts ist. Die Nut weist somit eine ausreichende Breite auf, um als Setztiefenmarkierung verwendet zu werden, die einen ausreichenden Toleranzbereich aufweist. Die Größe des hinteren Abschnitts ist dagegen ein Maß für den Verschiebeweg, der notwendig ist, um die Spreizhülse planmäßig zu Verspreizen. Die Nut kann in Umfangsrichtung geschlossen sein, so dass sie die Spreizhülse vollständig in Umfangsrichtung umfasst. Sie kann aber auch nur an einem Teil des Umfangs der Spreizhülse ausgebildet sein. Vorzugsweise ist die Nut in Einbringrichtung, insbesondere mit Abstand, hinter dem Spreizabschnitt, insbesondere in einem ungeschlitzten Bereich der Spreizhülse, angeordnet. Die Nut dient insbesondere als erste Setztiefenmarkierung. Sie ist aufgrund ihrer erfindungsgemäßen Positionierung außen, auf der Mantelfläche der Spreizhülse, gut sichtbar. Beim Einsetzen des Spreizankers in ein Sackloch zeigt die Nut als Setztiefenmarkierung an, ob das Sackloch tief genug gebohrt ist oder ob der Anwender das Sackloch noch tiefer bohren muss. Das Sackloch muss so tief gebohrt sein, dass sich die Nut im unverspreizten Zustand des Spreizankers und wenn der Ankerbolzen planmäßig am Grund des Sacklochs ansteht, sich im Bereich des Bohrlochmundes befindet. Dabei ist die Spreizhülse soweit gegen den Spreizkörper verschoben, dass sie nicht weiter gegen den Spreizkörper bewegt werden kann, ohne aufzuspreizen. Die Nut kann zuätzlich zu ihrer Verwendung als erste Setztiefenmarkierung zudem zur Demontage der Spreizhülse verwendet werden, falls die Tiefe des Sacklochs unzureichend ist und die Spreizhülse irrtümlich dennoch verspreizt wurde. In diesem Fall kann an der Nut ein Demontagewerkzeug angesetzt werden, das in die Nut eingreift und mit dem die Spreizhülse nach hinten, entgegen der Einbringrichtung, aus dem Sackloch heraus bewegt werden kann.

Bei einer bevorzugten Ausgestaltungsform des erfindungsgemäßen Spreizankers ist die radiale Tiefe der Nut größer als 80 % der radialen Restwanddicke der Spreizhülse im Bereich der Nut. Insbesondere ist die radiale Tiefe der Nut größer als 90 % der radialen Restwanddicke, insbesondere größer oder gleich der radialen Restwanddicke. "Radial" bezieht sich hier auf eine Richtung, die zur Längsachse des Spreizankers orthogonal ist. Insbesondere ist die Wandstärke der Spreizhülse im Bereich der Nut kleiner als 60 % der Wandstärke der Spreizhülse in dem vorderen und/oder dem hinteren Abschnitt. Aufgrund der geringen Wandstärke ist die Spreizhülse im Bereich der Nut durch Stauchen verkürzbar, so dass sich die Spreizhülse in der erfindungsgemäßen Befestigungsanordnung durch Stauchen bündig mit dem Bohrlochmund setzen lässt. Zudem ist die in Längsrichtung gemessene Breite der Nut größer als die dreifache, insbesondere größer als die 3,5-fache radiale Restwanddicke, was für das Stauchen vorteilhaft ist, da sich bei dieser Ausgestaltung die Wand der Nut radial nach außen verformt und nicht zum Ankerbolzen hin.

Vorzugsweise ist im Bereich der Nut mindestens eine, insbesondere punktuelle, Einprägung ausgeformt, derart, dass die Spreizhülse auf ihrer dem Ankerbolzen zugewandten Innenseite mindestens einen Vorsprung zum axialen Sichern der Spreizhülse am Ankerbolzen aufweist. Insbesondere greift der Vorsprung in ein als Außengewinde ausgebildetes Lastangriffsmittel ein. Die Ausbildung der Einprägung im Bereich der Nut hat den Vorteil, dass aufgrund der geringen Restwanddicke im Bereich der Nut das Prägen der Einprägung schon bei geringer Kraft möglich ist.

Die Erfindung wird nachfolgend anhand eines in den Figuren dargestellten Ausführungsbeispiels näher erläutert.

Es zeigen:
- Figur 1: eine erfindungsgemäße Befestigungsanordnung mit einem erfindungsgemäßen Spreizanker in einem unverspreizten Zustand;
- Figur 2: eine vergrößerte Darstellung des Details II der Figur 1;
- Figur 3: die Befestigungsanordnung der Figur 1 mit dem Spreizanker in einem verspreizten Zustand; und
- Figur 4: die Befestigungsanordnung der Figur 3 mit einem etwas kürzeren Sackloch.

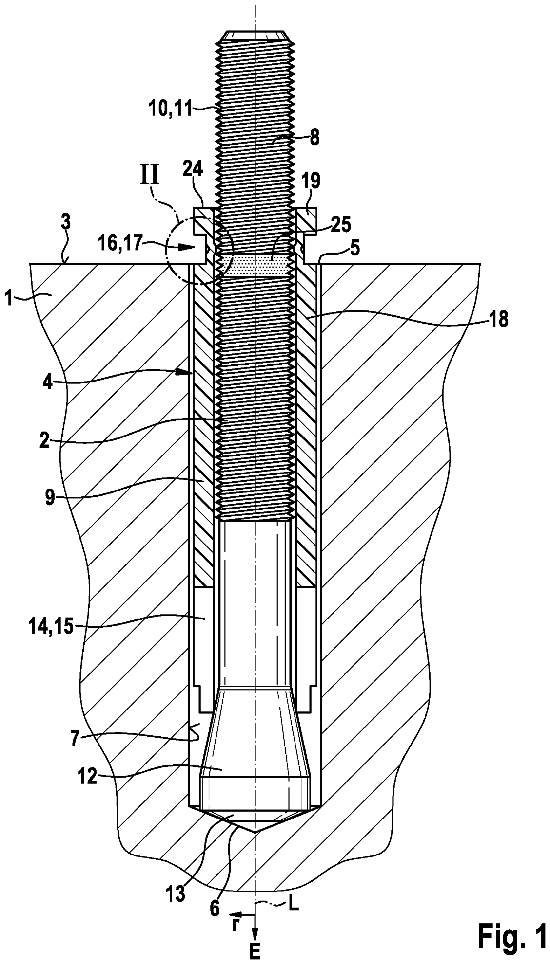

In den Figuren 1 bis 4 ist eine erfindungsgemäße Befestigungsanordnung mit einem Verankerungsgrund 1 und einem Spreizanker 2 dargestellt. Der Verankerungsgrund 1 ist eine Wand aus Beton, mit einer Oberfläche 3, in der ein Sackloch 4 eine Öffnung bildet, den Bohrlochmund 5. Der Bohrlochmund 5 ist bündig mit der das Sackloch 4 umgebenden Oberfläche 3 des Verankerungsgrunds 1. Das Sackloch 4 erstreckt sich im Verankerungsgrund 1 vom Bohrlochmund 5, der das vom in Einbringrichtung E des Spreizankers 2 in das Sackloch 4 gesehen hintere Ende des Sacklochs 4 bildet, zum kegeligen Bohrlochgrund 6, der das in Einbringrichtung E vordere Ende des Sacklochs 4 bildet. Bohrlochmund 5 und Bohrlochgrund 6 sind durch die Bohrlochwand 7 verbunden.

Der Spreizanker 2 erstreckt sich entlang einer Längsachse L, die parallel zur Einbringrichtung E verläuft, und weist einen Ankerbolzen 8 und eine Spreizhülse 9 auf. Am Ankerbolzen 8 ist an einem in Einbringrichtung E hinteren Teil ein Außengewinde 10 als Lastangriffsmittel 11 ausgebildet, das sich über ungefähr zwei Drittel der axialen Länge des Ankerbolzens 8 erstreckt. In Einbringrichtung E vorn weist der Ankerbolzen 8 einen konisch-zylindrischen Spreizkörper 12 auf, der sich in seinem konischen Bereich in Einbringrichtung E im Durchmesser erweitert. An seinem vorderen Ende 13 ist der Ankerbolzen 8 kegelstumpfförmig ausgebildet, mit in Einbringrichtung E abnehmendem Durchmesser. Das kegelstumpfförmige vordere Ende 13 des Ankerbolzens 8 korrespondiert zum konischen Bohrlochgrund 6, an dem sich der Ankerbolzen 8 abstützt und mit seinem vorderen Ende 13 flächig anliegt.

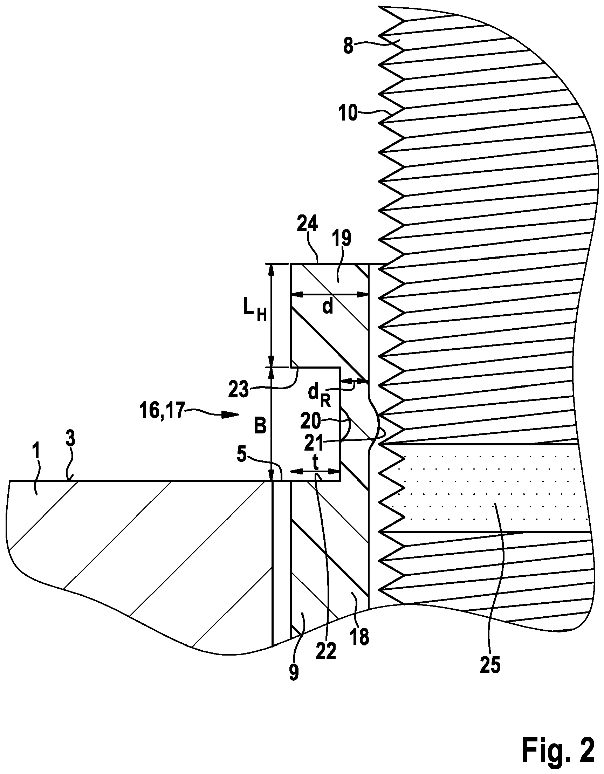

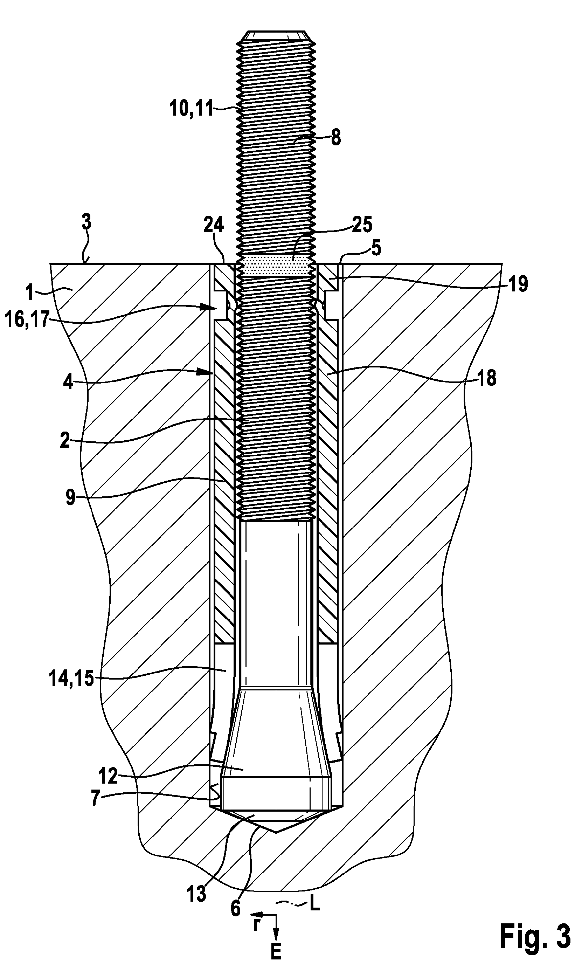

Die Spreizhülse 9 ist einstückig, als im Umfang geschlossenes Rohr ausgeführt, mit einem in Einbringrichtung E vorn an der Spreizhülse 9 angeordneten geschlitzten Spreizabschnitt 14, in dem die Spreizhülse 9 durch Schlitze in kragarmförmige Spreizelemente 15 unterteilt ist. Die Spreizhülse 9 ist am Ankerbolzen 8 in Längsrichtung, also entlang der Längsachse L, beweglich angeordnet. Die Spreizhülse 9 kann somit in Einbringrichtung E gegen den Spreizkörper 10 verschoben werden, derart, dass die Spreizelemente 15 des Spreizabschnitts 14 radial zur Längsachse L in radialer Richtung r voneinander weg bewegt werden, wodurch der Spreizabschnitt 14 im Sackloch 4 verspreizt. Dabei werden die Spreizelemente 15 gegen die Bohrlochwand 7 gepresst, wie dies in den Figuren 2 und 3 zu sehen ist, in denen der Spreizanker 2 in einem verspreizten Zustand dargestellt ist. Dagegen ist in Figur 1 ein unverspreizter Zustand dargestellt, in dem der Ankerbolzen 8 am Bohrlochgrund 6 des Sacklochs 4 ansteht und die Spreizhülse 9 soweit gegen den Spreizkörper 12 verschoben ist, dass sie am Spreizkörper 12 ansteht und ohne aufzuspreizen nicht weiter gegen den Spreizkörper 12 bewegt werden kann.

Am hinteren, ungeschlitzten Teil der Spreizhülse 9 ist eine in Umfangsrichtung verlaufende Nut 16 als erste Setztiefenmarkierung 17 angeordnet. In Einbringrichtung E vor der Nut 16 weist die Spreizhülse 9 einen vorderen Abschnitt 18 und hinter der Nut 16 einen hinteren Abschnitt 19 auf. Die Nut 16 ist mit einem rechteckförmigen Querschnitt ausgeformt. Sie reduziert die Wandstärke d der Spreizhülse 9 im Bereich der Nut 16 auf eine Restwanddicke d_{R}, wobei die radiale Tiefe t der Nut 16 60% der radialen Wandstärke d der Spreizhülse 9 beträgt (vgl. Figur 2). Die Tiefe t der Nut 16 ist somit größer als die Restwanddicke d_{R} der Spreizhülse 9 im Bereich der Nut 16. Die in Längsrichtung gemessene Breite B der Nut 16 ist größer als die 3,5-fache radiale Restwanddicke d_{R} und somit auch größer als die in Längsrichtung gemessene Länge L_{H} des hinteren Abschnitts 19 der Spreizhülse 9. Mittig in der Nut 16 ist eine punktuelle Einprägung 20 radial nach innen zum Ankerbolzen 8 hin ausgeformt, derart, dass die Spreizhülse 9 auf ihrer Innenseite einen Vorsprung 21 aufweist, der in das Außengewinde 10 des Ankerbolzens 8 eingreift und die Spreizhülse 9 gegen ein ungewolltes axiales Verschieben am Ankerbolzen 8 sichert.

Zum Verankern des Spreizankers 2 im Sackloch 4 wird der Spreizanker 2 zunächst in das Sackloch 4 eingeschoben, bis der Spreizanker 2 mit dem vorderen Ende 13 des Ankerbolzens 8 am Bohrlochgrund 6 ansteht. Vor dem Verspreizen befindet sich der in das Sackloch 4 eingeführte Spreizanker 2 in einem unverspreizten Zustand, wie er in Figur 1 dargestellt ist. Dabei ist die Spreizhülse 9 soweit gegen den Spreizkörper 12 verschoben, dass sie ohne aufzuspreizen nicht weiter gegen den Spreizkörper 12 bewegt werden kann. In diesem Zustand befindet sich ein vorderes Ende 22 der als erste Setztiefenmarkierung 17 wirkenden Nut 16 am Bohrlochmund 5, d.h. in einer Ebene mit dem Bohrlochmund 5 und der Oberfläche 3 des Verankerungsgrunds 1 (vgl. Figur 2). Damit signalisiert die erste Setztiefenmarkierung 17 einem Verwender, dass das Sackloch 4 eine planmäßige Tiefe aufweist und der Spreizanker 2 sich planmäßig im Sackloch 4 befindet, so dass er nun verspreizt werden kann. Dies gilt auch für den Fall, dass sich das vordere Ende 22 der ersten Setztiefenmarkierung 17 im Sackloch 4 befindet und nur ein Teil der Nut 16 für den Verwender sichtbar entgegen der Einbringrichtung E über den Bohrlochmund 5 übersteht. Die Nut 16 weist eine Breite B auf, die dem zulässigen Toleranzbereich der Tiefe des Sacklochs 4 entspricht. Dies bedeutet, dass bei einem zu tief gebohrten Sackloch 4 das hintere Ende 23 der ersten Setztiefenmarkierung 23 sich im Sackloch 4 befindet, wenn der Ankerbolzen 8 am Bohrlochgrund 6 ansteht. Ein Verwender kann die Nut 16 dann nicht mehr sehen, so dass er erkennt, dass das Sackloch 4 keine planmäßige Tiefe aufweist. Ist das Sackloch 4 dagegen nicht tief genug gebohrt, so bleibt der vordere Abschnitt 18 der Spreizhülse 9 sichtbar.

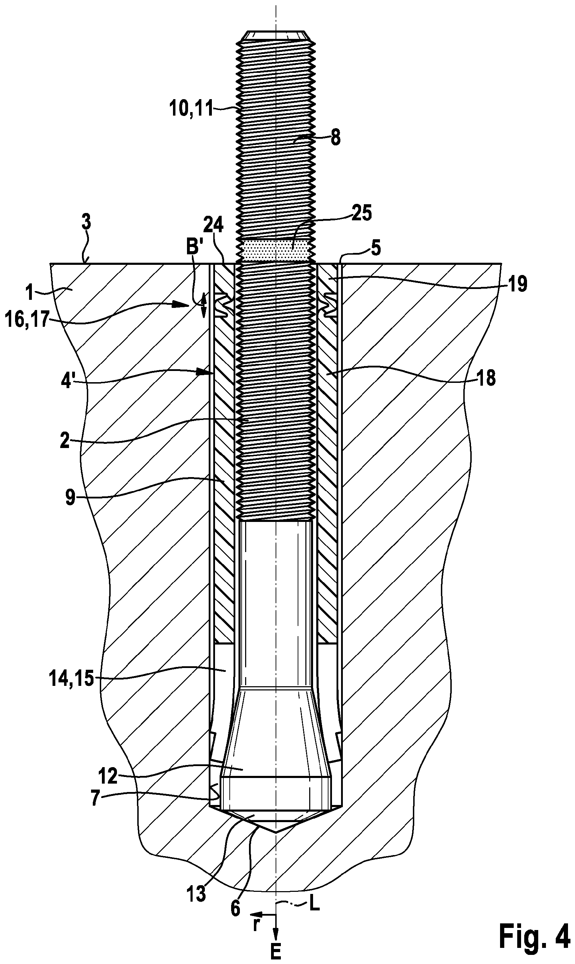

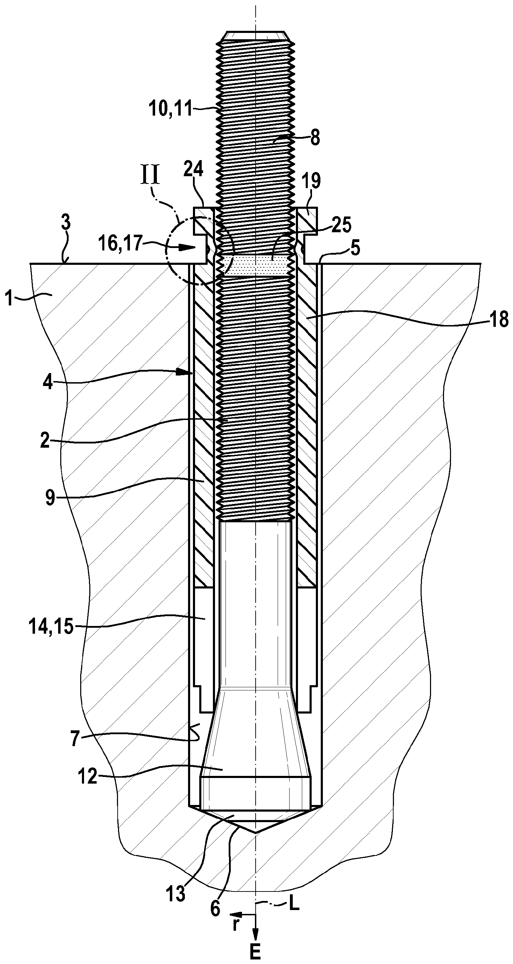

Ist der Spreizanker 2 planmäßig in das Sackloch 4 eingesetzt, dann wird die Spreizhülse 9 durch Schläge auf ihr hinteres Ende 24 auf den Spreizkörper 12 aufgeschoben, wodurch die Spreizelemente 15 des geschlitzten Spreizabschnitts 14 radial nach außen, voneinander weg bewegt und gegen die Bohrlochwand 7 gepresst werden, wie dies in den Figuren 3 und 4 dargestellt ist. In Figur 3 ist der Fall dargestellt, dass der Spreizabschnitt 14 der Spreizhülse 9 planmäßig verspreizt ist. Der Spreizanker 2 befindet sich im verspreizten Zustand, in dem er im Sackloch 4 im Verankerungsgrund 1 planmäßig verankert ist. In diesem Zustand ist das hintere Ende 24 der Spreizhülse 9 bündig mit dem Bohrlochmund 5. Dies signalisiert dem Verwender, dass der Spreizanker 2 planmäßig im Verankerungsgrund 1 verankert ist. Alternativ kann sich das hintere Ende 24 auch im Sackloch 4 befinden. In diesem Zustand ist zusätzlich eine zweite Setztiefenmarkierung 25 sichtbar, die als umlaufender farbiger Ring am Ankerbolzen 8 ausgebildet ist und teilweise über den Bohrlochmund 5 übersteht. Die zweite Setztiefenmarkierung 25 dient ebenfalls zur Kontrolle, dass die Spreizhülse 9 weit genug auf den Spreizkörper 12 aufgeschoben und somit der Spreizabschnitt 14 planmäßig verspreizt ist.

Das in Figur 4 dargestellte Sackloch 4' weist eine Tiefe auf, die geringfügig kleiner als die Tiefe des Sacklochs 4 in Figur 3 ist. Das Sackloch 4' ist nicht planmäßig, sondern nicht tief genug gebohrt. In diesem Fall würde im unverspreizten Zustand das vordere Ende 22 der ersten Setztiefenmarkierung 17 über den Bohrlochmund 5 überstehen. Dies würde einem Anwender signalisieren, dass das Sackloch 4' keine planmäßige Tiefe aufweist. Würde der Anwender aber die Spreizhülse 9 trotzdem verspreizen, so würde das hintere Ende 24 der Spreizhülse 9 nach dem planmäßigen Verspreizen entgegen der Einbringrichtung E über den Bohrlochmund 5 überstehen, was die Montage eines Anbauteils (nicht dargestellt) behindert. Aufgrund der erfindungsgemäßen Ausgestaltung der Nut 16, mit einer, bezogen auf ihre Restwanddicke d_{R}, relativ großen Breite B, lässt sich die Spreizhülse 9 im Bereich der Nut 16 mit, gegenüber dem planmäßigen Verspreizen erhöhter Schlagenergie, stauchen, auch wenn der Spreizabschnitt 14 der Spreizhülse 9 bereits planmäßig verspreizt ist, soweit, bis das hintere Ende 24 der Spreizhülse 9 bündig mit dem Bohrlochmund 5 ist. Durch das Stauchen ist die in Längsrichtung gemessene Breite B' der Nut 16 im verspreizten Zustand geringer als im unverspreizten Zustand. Aufgrund der Stauchbarkeit der Nut 16 verfügt der Spreizanker 2 somit über einen zusätzlichen Toleranzbereich hinsichtlich der Tiefe des Sacklochs 4, der aber nur in Ausnahmefällen genutzt wird, da im Regelfall die erste Setztiefenmarkierung 17 eine falsche Montage des Spreizankers 2 verhindert.

Aufgrund der erfindungsgemäßen Ausgestaltung des Spreizankers 2 ist für die Herstellung der erfindungsgemäßen Befestigungsanordnung kein spezielles Bohr- oder Prüfwerkzeug notwendig, insbesondere kein Bundbohrer. Die Befestigungsanordnung kann mittels üblicher und kostengünstiger Werkzeuge hergestellt werden.

### Bezuqszeichenliste

- 1: Verankerungsgrund
- 2: Spreizanker
- 3: Oberfläche des Verankerungsgrunds 1
- 4,4': Sackloch
- 5: Bohrlochmund
- 6: Bohrlochgrund
- 7: Bohrlochwand
- 8: Ankerbolzen
- 9: Spreizhülse
- 10: Außengewinde
- 11: Lastangriffsmittel
- 12: Spreizkörper
- 13: vorderes Ende des Ankerbolzens 8
- 14: Spreizabschnitt
- 15: Spreizelement
- 16: Nut
- 17: erste Setztiefenmarkierung
- 18: vorderer Abschnitt der Spreizhülse 9
- 19: hinterer Abschnitt der Spreizhülse 9
- 20: Einprägung
- 21: Vorsprung
- 22: vorderes Ende der ersten Setztiefenmarkierung 17
- 23: hinteres Ende der ersten Setztiefenmarkierung 17
- 24: hinteres Ende der Spreizhülse 9
- 25: zweite Setztiefenmarkierung
- B, B': Breite der Nut 16
- d: Wanddicke
- d_{R}: Restwanddicke
- E: Einbringrichtung
- L: Längsachse
- L_{H}: Länge des hinteren Abschnitts 19
- r: radiale Richtung
- t: Tiefe der Nut 16

## Patentansprüche

1. Befestigungsanordnung mit einem Verankerungsgrund (1) und einem Spreizanker (2), wobei der Spreizanker (2) einen Ankerbolzen (8) und eine Spreizhülse (9) aufweist und durch Verspreizen der Spreizhülse (9) in einem Sackloch (4, 4') im Verankerungsgrund (1) verankerbar ist,
wobei der Ankerbolzen (8) an einem in Einbringrichtung (E) hinteren Teil ein Lastangriffsmittel (11) und in Einbringrichtung (E) vorn einen Spreizkörper (12) zum Verspreizen der Spreizhülse (9) im Sackloch (4, 4') aufweist,
wobei die Spreizhülse (9) rohrförmig ausgebildet und am Ankerbolzen (8) in Längsrichtung beweglich angeordnet ist, wobei die Spreizhülse (9) in Einbringrichtung (E) vorn einen Spreizabschnitt (14) aufweist, der mittels des Spreizkörpers (12) aufspreizbar ist,
**dadurch gekennzeichnet,**
**dass** an der Spreizhülse (9) eine erste Setztiefenmarkierung (17) angeordnet ist, deren in Einbringrichtung (E) vorderes Ende (22) sich in einem unverspreizten Zustand, wenn der Ankerbolzen (8) planmäßig am Bohrlochgrund (6) des Sacklochs (4) ansteht und die Spreizhülse (9) soweit gegen den Spreizkörper (12) verschoben ist, dass sie ohne aufzuspreizen nicht weiter gegen den Spreizkörper (12) bewegt werden kann, am Bohrlochmund (5) oder im Sackloch (4, 4') befindet.

2. Befestigungsanordnung nach Anspruch 1, **dadurch gekennzeichnet, dass** ein in Einbringrichtung (E) hinteres Ende (23) der ersten Setztiefenmarkierung (17) sich im unverspreizten Zustand am Bohrlochmund (5) oder außerhalb des Sacklochs (4, 4') befindet,

3. Befestigungsanordnung nach Anspruch 1 oder 2, **dadurch gekennzeichnet, dass** ein hinteres Ende (24) der Spreizhülse (9) in einem verspreizten Zustand, in dem der Spreizanker (2) planmäßig im Sackloch (4, 4') verankert ist, bündig mit dem Bohrlochmund (5) ist oder sich innerhalb des Sacklochs (4, 4') befindet.

4. Befestigungsanordnung nach einem der Ansprüche 1 bis 3, **dadurch gekennzeichnet, dass** am Ankerbolzen (8) eine zweite Setztiefenmarkierung (25) angeordnet ist, die im planmäßig verspreizten Zustand zumindest teilweise über den Bohrlochmund (5) übersteht.

5. Befestigungsanordnung nach einem der Ansprüche 1 bis 4, **dadurch gekennzeichnet, dass** die erste Setztiefenmarkierung (17) eine Nut (16) ist.

6. Befestigungsanordnung nach Anspruch 5, **dadurch gekennzeichnet, dass** die in Längsrichtung gemessene Breite (B, B') der Nut (16) im verspreizten Zustand geringer als im unverspreizten Zustand ist.

7. Spreizanker, insbesondere zur Verwendung in einer Befestigungsanordnung nach einem der Ansprüche 1 bis 6, mit einem Ankerbolzen (8) und einer Spreizhülse (9), wobei der Spreizanker (2) durch Verspreizen der Spreizhülse (9) in einem Sackloch (4) in einem Verankerungsgrund (1) verankerbar ist,
wobei der Ankerbolzen (8) an einem in Einbringrichtung (E) hinteren Teil ein Lastangriffsmittel (11) und in Einbringrichtung (E) vorn einen Spreizkörper (12) zum Verspreizen der Spreizhülse (9) aufweist,
wobei die Spreizhülse (9) rohrförmig ausgebildet und am Ankerbolzen (8) in Längsrichtung beweglich angeordnet ist, wobei die Spreizhülse (9) in Einbringrichtung (E) vorn einen Spreizabschnitt (14) aufweist, der mittels des Spreizkörpers (12) aufspreizbar ist,
**dadurch gekennzeichnet,**
**dass** an der Spreizhülse (9) eine in Umfangsrichtung verlaufende Nut (16) ausgebildet ist, die Spreizhülse (9) einen in Einbringrichtung (E) vor der Nut (16) angeordneten vorderen Abschnitt (18) und einen in Einbringrichtung (E) hinter der Nut (16) angeordneten hinteren Abschnitt (19) aufweist, und dass die in Längsrichtung gemessene Breite (B) der Nut (16) größer als die Hälfte der in Längsrichtung gemessenen Länge (L_{H}) des hinteren Abschnitts (19), vorzugsweise größer als die in Längsrichtung gemessene Länge (L_{H}) des hinteren Abschnitts (19), ist.

8. Spreizanker nach Anspruch 7, **dadurch gekennzeichnet, dass** die Nut (16) in Einbringrichtung (E), insbesondere mit Abstand, hinter dem Spreizabschnitt (14) angeordnet ist.

9. Spreizanker nach Anspruch 7 oder 8, **dadurch gekennzeichnet, dass** die radiale Tiefe (t) der Nut (16) größer als 80 % der radialen Restwanddicke (d_{R}) der Spreizhülse (9) im Bereich der Nut (16) ist.

10. Spreizanker nach einem der Ansprüche 7 bis 9, **dadurch gekennzeichnet, dass** die in Längsrichtung gemessene Breite (B) der Nut (16) größer als die dreifache radiale Restwanddicke (d_{R}), insbesondere größer als die 3,5-fache radiale Restwanddicke (d_{R}) der Spreizhülse (9) im Bereich der Nut (16) ist.

11. Spreizanker nach einem der Ansprüche 7 bis 10, **dadurch gekennzeichnet, dass** im Bereich der Nut (16) mindestens eine Einprägung (20) ausgeformt ist, derart, dass die Spreizhülse (9) auf ihrer dem Ankerbolzen (8) zugewandten Innenseite mindestens einen Vorsprung (21) zum axialen Sichern der Spreizhülse (9) am Ankerbolzen (8) aufweist.

## Claims

1. Fixing arrangement having an anchoring substrate (1) and an expansible anchor (2), wherein the expansible anchor (2) has an anchor bolt (8) and an expansion sleeve (9) and is arranged to be anchored in the anchoring substrate (1) by expansion of the expansion sleeve (9) in a blind hole (4, 4'),
wherein the anchor bolt (8) has, on a rear portion in the direction of introduction (E), a load-application means (11) and, at the front in the direction of introduction (E), an expander body (12) for expanding the expansion sleeve (9) in the blind hole (4, 4'),
wherein the expansion sleeve (9) is of tubular construction and is arranged on the anchor bolt (8) so as to be movable in the longitudinal direction, the expansion sleeve (9) having, at the front in the direction of introduction (E), an expansion portion (14) which is arranged to be expanded by means of the expander body (12),
**characterised in that**
on the expansion sleeve (9) there is arranged a first setting-depth marker (17) the front end (22) of which in the direction of introduction (E), in an unexpanded state in which the anchor bolt (8) abuts as intended against the base (6) of the blind hole (4) and the expansion sleeve (9) has been pushed towards the expander body (12) to an extent such that it cannot be moved further towards the expander body (12) without being expanded, is located at the mouth (5) of the drilled hole or in the blind hole (4, 4').

2. Fixing arrangement according to claim 1, **characterised in that,** in the unexpanded state, a rear end (23) of the first setting-depth marker (17) in the direction of introduction (E) is located at the mouth (5) of the drilled hole or outside the blind hole (4, 4').

3. Fixing arrangement according to claim 1 or 2, **characterised in that** a rear end (24) of the expansion sleeve (9), in an expanded state in which the expansible anchor (2) has been anchored as intended in the blind hole (4, 4'), is flush with the mouth (5) of the drilled hole or is located inside the blind hole (4, 4').

4. Fixing arrangement according to any one of claims 1 to 3, **characterised in that** on the anchor bolt (8) there is arranged a second setting-depth marker (25) which, in the state in which the anchor has been expanded as intended, projects at least partly beyond the mouth (5) of the drilled hole.

5. Fixing arrangement according to any one of claims 1 to 4, **characterised in that** the first setting-depth marker (17) is a groove (16).

6. Fixing arrangement according to claim 5, **characterised in that** the width (B, B') of the groove (16) measured in the longitudinal direction is smaller in the expanded state than in the unexpanded state.

7. Expansible anchor, especially for use in a fixing arrangement according to any one of claims 1 to 6, having an anchor bolt (8) and an expansion sleeve (9), wherein the expansible anchor (2) is arranged to be anchored in an anchoring substrate (1) by expansion of the expansion sleeve (9) in a blind hole (4),
wherein the anchor bolt (8) has, on a rear portion in the direction of introduction (E), a load-application means (11) and, at the front in the direction of introduction (E), an expander body (12) for expanding the expansion sleeve (9),
wherein the expansion sleeve (9) is of tubular construction and is arranged on the anchor bolt (8) so as to be movable in the longitudinal direction, the expansion sleeve (9) having, at the front in the direction of introduction (E), an expansion portion (14) which is arranged to be expanded by means of the expander body (12),
**characterised in that**
a groove (16) running in the circumferential direction is formed on the expansion sleeve (9), the expansion sleeve (9) has a front portion (18) arranged to the front of the groove (16) in the direction of introduction (E) and a rear portion (19) arranged to the rear of the groove (16) in the direction of introduction (E), and the width (B) of the groove (16) measured in the longitudinal direction is greater than half the length (L_{H}) of the rear portion (19) measured in the longitudinal direction, preferably greater than the length (L_{H}) of the rear portion (19) measured in the longitudinal direction.

8. Expansible anchor according to claim 7, **characterised in that** the groove (16) is arranged to the rear of the expansion portion (14), especially spaced apart therefrom, in the direction of introduction (E).

9. Expansible anchor according to claim 7 or 8, **characterised in that** the radial depth (t) of the groove (16) is greater than 80% of the radial residual wall thickness (d_{R}) of the expansion sleeve (9) in the region of the groove (16).

10. Expansible anchor according to any one of claims 7 to 9, **characterised in that** the width (B) of the groove (16) measured in the longitudinal direction is greater than three times the radial residual wall thickness (d_{R}), especially greater than 3.5 times the radial residual wall thickness (d_{R}) of the expansion sleeve (9) in the region of the groove (16).

11. Expansible anchor according to any one of claims 7 to 10, **characterised in that** at least one indentation (20) is formed in the region of the groove (16) in such a way that the expansion sleeve (9), on its inner side facing towards the anchor bolt (8), has at least one projection (21) for axially securing the expansion sleeve (9) on the anchor bolt (8).

## Revendications

1. Dispositif de fixation comprenant une assise d'ancrage (1) et une pièce d'ancrage expansible (2), ladite pièce d'ancrage expansible (2) comportant un tirant d'ancrage (8) et une douille expansible (9) et pouvant être ancrée, par déploiement de ladite douille expansible (9), dans un trou borgne (4, 4') pratiqué dans ladite assise d'ancrage (1),
ledit tirant d'ancrage (8) étant muni d'un moyen (11) d'application de charge sur une partie située à l'arrière dans la direction d'insertion (E) et, à l'avant dans ladite direction d'insertion (E), d'un corps d'écartement (12) conçu pour déployer la douille expansible (9) dans le trou borgne (4, 4'),
laquelle douille expansible (9) est de réalisation tubulaire et est agencée avec mobilité dans la direction longitudinale, sur le tirant d'ancrage (8), ladite douille expansible (9) étant pourvue, à l'avant dans la direction d'insertion (E), d'une zone expansible (14) pouvant être déployée au moyen dudit corps d'écartement (12),
**caractérisé par**
la présence, sur la douille expansible (9), d'un premier repère (17) de profondeur de pose dont l'extrémité (22), située à l'avant dans la direction d'insertion (E), se trouve dans un état non déployé, au niveau de l'embouchure (5) du trou foré ou dans le trou borgne (4, 4'), lorsque le tirant d'ancrage (8) se présente de la manière programmée au fond (6) dudit trou borgne (4) et ladite douille expansible (9) est à l'état déplacé, vers le corps d'écartement (12), d'une distance telle qu'elle ne peut plus être mue davantage, vers ledit corps d'écartement (12), sans subir un déploiement.

2. Dispositif de fixation selon la revendication 1, **caractérisé par le fait que** l'extrémité (23) du premier repère (17) de profondeur de pose, située à l'arrière dans la direction d'insertion (E), se trouve à l'état non déployé au niveau de l'embouchure (5) du trou foré ou à l'extérieur du trou borgne (4, 4').

3. Dispositif de fixation selon la revendication 1 ou 2, **caractérisé par le fait qu'**une extrémité postérieure (24) de la douille expansible (9) se trouve dans l'affleurement de l'embouchure (5) du trou foré, ou à l'intérieur du trou borgne (4, 4') dans un état déployé dans lequel la pièce d'ancrage expansible (2) est ancrée dans ledit trou borgne (4, 4') de la manière programmée.

4. Dispositif de fixation selon l'une des revendications 1 à 3, **caractérisé par** la présence, sur le tirant d'ancrage (8), d'un second repère (25) de profondeur de pose qui fait au moins partiellement saillie au-delà de l'embouchure (5) du trou foré à l'état déployé de la manière programmée.

5. Dispositif de fixation selon l'une des revendications 1 à 4, **caractérisé par le fait que** le premier repère (17) de profondeur de pose est une rainure (16).

6. Dispositif de fixation selon la revendication 5, **caractérisé par le fait que** la largeur (B, B') de la rainure (16), mesurée dans la direction longitudinale, est moindre à l'état déployé qu'à l'état non déployé.

7. Pièce d'ancrage expansible dévolue, en particulier, à l'utilisation dans un dispositif de fixation conforme à l'une des revendications 1 à 6, dotée d'un tirant d'ancrage (8) et d'une douille expansible (9), ladite pièce d'ancrage expansible (2) pouvant être ancrée, par déploiement de ladite douille expansible (9), dans un trou borgne (4) pratiqué dans une assise d'ancrage (1),
ledit tirant d'ancrage (8) étant muni d'un moyen (11) d'application de charge sur une partie située à l'arrière dans la direction d'insertion (E) et, à l'avant dans ladite direction d'insertion (E), d'un corps d'écartement (12) conçu pour déployer ladite douille expansible (9),
laquelle douille expansible (9) est de réalisation tubulaire et est agencée avec mobilité dans la direction longitudinale, sur le tirant d'ancrage (8), ladite douille expansible (9) étant pourvue, à l'avant dans la direction d'insertion (E), d'une zone expansible (14) pouvant être déployée au moyen dudit corps d'écartement (12),
**caractérisée par le fait**
**qu'**une rainure (16), s'étendant dans la direction circonférentielle, est pratiquée sur la douille expansible (9), ladite douille expansible (9) comprenant une région antérieure (18) située devant la rainure (16) dans la direction d'insertion (E), et une région postérieure (19) située derrière ladite rainure (16) dans ladite direction d'insertion (E) ; et par le fait que la largeur (B) de ladite rainure (16), mesurée dans la direction longitudinale, est supérieure à la moitié de la longueur (L_{H}) de la région postérieure (19), mesurée dans ladite direction longitudinale, de préférence supérieure à ladite longueur (L_{H}) de ladite région postérieure (19), mesurée dans ladite direction longitudinale.

8. Pièce d'ancrage expansible selon la revendication 7, **caractérisée par le fait que** la rainure (16) est située, en particulier, à distance derrière la zone expansible (14) dans la direction d'insertion (E).

9. Pièce d'ancrage expansible selon la revendication 7 ou 8, **caractérisée par le fait que** la profondeur radiale (t) de la rainure (16) est supérieure à 80 % de l'épaisseur radiale restante (d_{R}) de la paroi de la douille expansible (9) dans la région de ladite rainure (16).

10. Pièce d'ancrage expansible selon l'une des revendications 7 à 9, **caractérisée par le fait que** la largeur (B) de la rainure (16), mesurée dans la direction longitudinale, est supérieure au triple de l'épaisseur de paroi radiale restante (d_{R}), notamment supérieure à 3,5 fois ladite épaisseur radiale restante (d_{R}) de la paroi de la douille expansible (9) dans la région de ladite rainure (16).

11. Pièce d'ancrage expansible selon l'une des revendications 7 à 10, **caractérisée par le fait qu'**au moins une empreinte rentrante (20) est ménagée dans la région de la rainure (16), de façon telle que la douille expansible (9) soit pourvue, sur sa face intérieure tournée vers le tirant d'ancrage (8), d'au moins une protubérance (21) affectée à l'arrêt axial de ladite douille expansible (9) sur ledit tirant d'ancrage (8).
